# EUROPÄISCHE PATENTANMELDUNG

(11) **EP 0 888 990 A1**
(43) Veröffentlichungstag der Anmeldung: **07.01.1999**
(21) Anmeldenummer: 97110871.7
(22) Anmeldetag: 02.07.1997
(51) Int. Cl.: B65H 3/30, B65H 33/08, B65G 59/02, B65G 61/00

(54) **Verfahren zum automatisierten Umsetzen oder Palettieren/Depalettieren von ebenen Stapeln aus Papier-, Karton- oder Pappbögen**

(71) Anmelder: Winter, Gerd, D-25368 Kiebitzreihe (DE)
(72) Erfinder: Winter, Gerd, D-25368 Kiebitzreihe (DE)

(57) **Zusammenfassung**

Lose aufgestapelte Bögen aus Papier, Karton oder Pappe lassen sich von Paletten o.ä. automatisch entnehmen. Beim Palettieren legt man die einzelnen Stapel so ab, daß sich zwischen zwei Stapellagen eine vor- und zurückspringenden Kante ergibt, z.B. indem zwei aufeinanderfolgende Lagen einem seitlichen Versatz in einer oder zwei Richtungen aufweisen. Ein Roboter mit mechanischem Greifer und Untergriff kann so nach und nach alle Stapel anfassen und entnehmen. Der Versatz zwischen den einzelnen Lagen stabilisiert die gesamte Ladung, so daß Zwischenlagen nicht erforderlich sind.

## Beschreibung

Die Erfindung bezieht sich auf die Handhabung von Stapeln aus Papiererzeugnissen z.B. Faltschachtelzuschnitte. Diese werden aus einer ebenen Bahn, die man von großen Rollen abwickelt, herausgeschnitten oder gestanzt. Die Zuschnitte sind dann fertigt bedruckt und vorgefalzt einer weiterverarbeitenden Maschine z.B. dem Faltautomat o.ä. zuzuführen. Zwischen diesen Arbeitsgängen können Transportwege oder Materialpuffer liegen. Für diese Zwischenstationen sind die Zuschnitte von Herstellungsmaschinen abzunehmen und zu stapeln z.B. auf Paletten (Palettiervorgang). Dieses Abnehmen und Stapeln soll immer häufiger automatisch geschehen. Wichtiger aber noch ist das Entstapeln von den Paletten und das automatische Zuführen zu den folgenden Verarbeitungsmaschinen (Depalettieren).

Für das Palettieren finden sich verschiedene Greiftechniken und Stapelmethoden am Markt. Greifer wie z.B. gemäß Offenlegungsschrift DE 30 24 133 A1 oder Europäischer Patentanmeldung Nr. 93610026.2 haben den Vorteil, daß sie bei leicht verschiebbaren Gütern, wie z.B. Zeitschriftenstapel, keine Relativbewegung beim Ablegen auf den vorhandenen Stapel ausüben. Diese Greifer werden normalerweise an standardmäßige Roboter oder andere Handhabungsgeräte angebaut, mit denen sich eine große Vielzahl von Palettiermustern und Stapelstrategien erreichen lassen. Üblich ist manchmal die Verwendung von Zwischenlagen aus Holz, Pappe oder Papier, um hohe Stapel auf den Paletten zu stabilisieren.

Das Problem besteht nun darin, die automatisch aufgestapelten Zuschnitte wieder von der Palette o.ä. abzunehmen. Die Stapel sind meistens nicht extra einzeln gesichert oder verpackt, da sich oft genug eine nachfolgende Weiterverarbeitung anschließt. Verpackungen oder Umreifungen verursachen zusätzliche Kosten und müßten zudem wieder entfernt werden. Bei verpackten Stapeln ließe sich vielleicht ein Sauggreifer einsetzen, bestehen die Stapel jedoch aus lose aufeinander liegenden Bögen, so scheidet ein Sauggreifer aus. Die oben erwähnten Greiftechniken sind hier nur begrenzt von Nutzen, da sie für den Untergriff immer zwischen zwei Stapel fassen müssen. Dabei könnte es zu Beschädigungen der Zuschnitte oder gar zum Verrutschen der Stapel kommen. Greifer können kaum die aufgeschichteten Stapel anfassen. Vielfach bleibt nur die Möglichkeit, diese Stapel von Hand von einer Palette abzunehmen und der nachfolgenden Arbeitsstation (Faltautomat o.ä.) zuzuführen. Tatsächlich ist dies auch eine der gebräuchlichen Methoden.

Gegenstand der Erfindung ist nun ein Verfahren, mit dem man die auf Paletten oder sonstigen Transportunterlagen aufgeschichteten Zuschnittstapel wieder automatisch entnehmen kann. Dabei kann ein handelsüblicher Roboter mit einem speziellen Greifer verwendet werden.

Erfindungsgemäß wird dies dadurch erreicht, daß man die einzelnen Zuschnittstapel beim vorhergehenden Ablegen/Palettieren so ablegt, daß sich von einer Lage zur nächsten eine abwechselnd vor- und rückspringende Kante ergibt. Diese Kante kann an einer, alsauch an mehreren Seiten der Stapel entstehen. Man ordnet die aufeinanderfolgenden Lagen immer so an, daß sich in einer oder zwei Richtungen einen kleiner Versatz zur vorhergehenden Lage ergibt. Mit einen Greifer (z.B. ähnlich wie in Offenlegungsschrift DE 30 24 133 A 1) mit Untergriff o.ä. lassen sich nun die einzelnen Stapel anfassen und depalettieren. Diese können nun unter die jeweils vorspringende Kante greifen und ein oder mehrere Stapel gleichzeitig von der Palette entnehmen. Wichtig dabei ist, daß durch die Entnahmestrategie (z.B. immer zwei versetzte Stapel auf einmal) in Verbindung mit der vorherigen Palettierung immer neue vorspringenden Kanten entstehen, an denen man die auf der Palette befindlichen Reststapel anfassen und entnehmen kann.

Das erfindungsgemäße Verfahren hat nun folgende Vorteile: Das Abnehmen/Depalettieren kann nun ohne großen Mehraufwand ebenfalls automatisch erfolgen. Bisher nahm man die Stapel von Hand ab (anstrengend, da kurze Taktzeiten) - dies geschieht nun maschinell. Durch das versetzte Anordnen der einzelnen Stapel schafft man einen in sich stabilen Stapelverband. Zusätzliche Zwischenlagen, die weitere Kosten und Arbeitsgänge (einlegen, abnehmen, abstapeln usw.) erforderten sind so überflüssig.

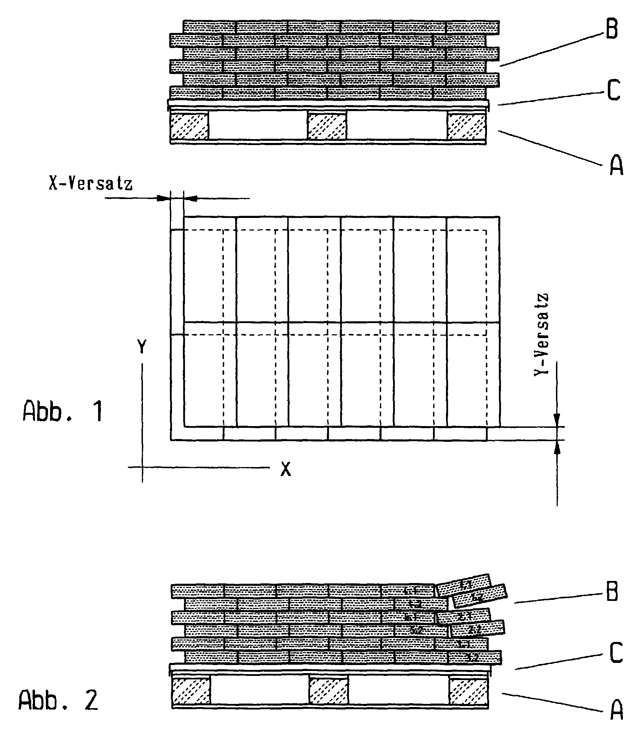

Nachfolgende ist das Verfahren anhand zweier Zeichnungen beschrieben. Abb. 1 zeigt eine Palette (A) mit sechs Lagen (B) von Zuschnittstapeln. Jede zweite Lage ist versetzt zur vorherigen. Die Draufsicht in Abb. 1 zeigt den Versatz in X- und Y-Richtung. Als Folge davon bilden sich am Rande des Palettenstapels überstehende Kanten. Hier kann ein Greifer mit Untergriff (z.B. aus o.g. Schriften) unterfassen.

Abb. 2 zeigt die Seitenansicht des Stapels und wie die ersten beiden Stapelpaare 1.1 und 1.2 entnommen worden sind und wie der Greifer die Stapel 2.1 und 2.2 zu entnehmen hat, nachdem die ersten beiden Stapel abgelegt wurden.

Das in Abb. 1 gezeigte Palettiermuster bewirkt in Verbindung mit der paarweisen Entnahme zweier übereinanderliegender Stapel, daß sich bei dem Reststapel diese Struktur der vorspringenden Kanten wiederholt. Ein Greifer mit Untergriff kann so jeden Stapel anfassen und automatisch von der Palette entnehmen.

Einzig bei der untersten Lage oder den beiden untersten Lagen auf der Palette ist dies Verfahren ein wenig zu modifizieren. Hier bedarf es einer Art Adapterplatte (C) zwischen Palette und der untersten Produktlage, damit der Untergriff eines möglichen Greifers einen Ansatzpunkt unter den Stapeln findet. Diese Adapterplatte könnte z.B. aus einem einfachen Lattenrost o.ä. bestehen. Dies müßte so auf die Palette gelegt werden, daß es nicht seitlich verrutscht. Die Adapterplatten könnten wiederverwendet werden und z.B. im innerbetrieblichen Materialfluß zirkulieren.

## Patentansprüche

1. Verfahren zum automatischen Depalettieren oder Entnehmen von Stapeln aus losen, unverbundenen Einzelbögen (z.B. Papier, Karton oder Pappe) aus einem vorher geschaffenen Stapelverbund, dadurch gekennzeichnet, daß sich aus Ablage- oder Palettierstrategie und Entnahmeverfahren (z.B. mittels mechanischem Greifer mit Untergriff) immer in den nachfolgend zu entnehmenden Stapeln vor- und zurückspringende Kanten ergeben, unter die der Untergriff greifen kann und sich die Stapel so anfassen und entnehmen lassen.

2. Verfahren nach Anspruch 1., dadurch gekennzeichnet, daß sich die vor- und zurückspringenden Kanten allein durch das Entnahmeverfahren ergeben und sich die Stapel so mittels Greifer anfassen und entnehmen lassen.

3. Verfahren nach Anspruch 1., dadurch gekennzeichnet, daß sich die Greifmöglichkeiten durch vor- und zurückspringende Kanten aus der Stapel- oder Produktgestaltung ergeben.

4. Verfahren nach Anspruch 1., dadurch gekennzeichnet, daß sie die Stapel an den vor- und zurückspringenden Kanten nicht mit Greifer sondern mit anderen Verfahren, z.B. spezieller Fördertechnik o.ä., anfassen und entnehmen lassen.

5. Verfahren nach Anspruch 1., gekennzeichnet dadurch, daß gleichzeitig zwei oder mehrere Stapel mittels der vor- und zurückspringenden Kanten gegriffen und entnommen werden.

6. Verfahren nach Anspruch 1., gekennzeichnet dadurch, daß nur ein Stapel mittels der vor- und zurückspringenden Kanten gegriffen und entnommen wird.

7. Verfahren nach Anspruch 1., gekennzeichnet dadurch, daß sich die vor- und zurückspringenden Kanten nur an einer oder zwei Stapelseiten bilden.

8. Verfahren nach Anspruch 1., gekennzeichnet dadurch, daß sich die vor- und zurückspringenden Kanten an zwei oder allen vier Stapelseiten bilden.
